# FASCICULE DE BREVET EUROPEEN

(11) **EP 3 631 250 B1**
(45) Date de publication et mention de la délivrance du brevet: **16.03.2022**
(21) Numéro de dépôt: 18728440.1
(22) Date de dépôt: 11.05.2018
(51) Int. Cl.: F16H 61/02, F16H 59/52, F16H 59/54

(54) **PROCEDE A BAS COUT DE CONTROLE D'UN DISPOSITIF DE TRANSMISSION DE COUPLE, NOTAMMENT POUR UN VEHICULE ELECTRIQUE OU HYBRIDE**
KOSTENGÜNSTIGES VERFAHREN ZUR STEUERUNG EINER DREHMOMENTÜBERTRAGUNGSVORRICHTUNG, INSBESONDERE FÜR EIN ELEKTRO- ODER HYBRIDFAHRZEUG
LOW-COST METHOD FOR CONTROLLING A TORQUE TRANSMISSION DEVICE, PARTICULARLY FOR AN ELECTRIC OR HYBRID VEHICLE

(30) Priorité: 31.05.2017 FR 1754794
(43) Date de publication de la demande: 08.04.2020
(73) Titulaire: Renault s.a.s, 92100 Boulogne Billancourt (FR)
(72) Inventeur: FERREIRA DE ARAUJO, Manoela, 94230 Cachan (FR); MARSILIA, Marco, 94230 Cachan (FR)
(74) Mandataire: Renault Group
(86) Numéro de dépôt international: PCT/FR2018/051157
(87) Numéro de publication internationale: WO 2018/220308

(56) Documents cités:
- EP-A1- 1 927 822
- DE-T5-112013 001 859
- FR-A1- 3 023 527
- US-A1- 2016 091 059

## Description

La présente invention concerne un procédé à bas coût pour changer de rapport de transmission sans rupture de couple. Elle s'applique tout particulièrement aux véhicules électriques ou hybrides.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de répondre aux besoins des EV et des HEV. Il apparaît aujourd'hui que les batteries à cellules lithium-ion (Li-ion) sont celles susceptibles de fournir le meilleur compromis entre la densité de puissance, qui favorise les performances en termes d'accélération notamment, et la densité d'énergie, qui favorise l'autonomie.

A l'heure actuelle, le principal frein à l'essor de ces véhicules reste l'autonomie des batteries Li-ion. C'est pourquoi il est primordial de gérer au plus près les prestations de performance mises à la disposition du conducteur, notamment en termes d'accélération, car celles-ci se font souvent au détriment de l'autonomie. Il s'agit là d'un problème que la présente invention se propose de résoudre.

La solution classique de l'état de l'art pour réaliser un bon compromis entre autonomie et performances est d'utiliser une transmission à plusieurs rapports : des rapports courts pour optimiser la performance et des rapports longs pour optimiser l'autonomie. Toutefois, ces solutions « multi-rapports » présentent plusieurs inconvénients. Un premier inconvénient est la dégradation de l'agrément de conduite. En effet, changer de rapport de transmission nécessite d'interrompre brièvement la transmission du couple de traction aux roues motrices, ce qui entraîne chez le conducteur une sensation désagréable dite de « rupture de couple », c'est-à-dire une brève interruption de l'accélération. Il s'agit là encore d'un problème que la présente invention se propose de résoudre. Un autre inconvénient de ces solution multi-rapports est le coût élevé d'un dispositif à plusieurs rapports de transmission, qui tend à augmenter non seulement avec le nombre de rapports disponibles, mais également dès lors que l'on met en œuvre des moyens mécaniques pour limiter voire empêcher la rupture de couple au passage d'un rapport à l'autre. Or, quand on sait qu'un autre frein à l'essor des véhicules électrique ou hybride est le prix de revient des batteries Li-ion, qui reste très élevé à l'heure actuelle, on comprend tout de suite qu'il est primordial de privilégier les technologies à bas coût à bord de ces véhicules, afin de compenser le prix de leur batterie et de les rendre accessibles au plus grand nombre. A partir de ce constat, on comprend facilement que les solutions multi-rapports sans rupture de couple de l'état de l'art s'avèrent inadaptées au marché des véhicules d'entrée de gamme à coût très contraint. Il s'agit là encore d'un problème que la présente invention se propose de résoudre.

Le document US2016/091059A1 divulgue un système de transmission de couple pour véhicule électrique ou hybride présentant tout ou partie des inconvénients précités.

L'invention a notamment pour but de surmonter les inconvénients précités, en fournissant le meilleurs compromis entre les performances, l'autonomie, l'agrément de conduite et le coût du véhicule. Pour cela, un principe directeur de l'invention est de minimiser les changements de rapport dans un dispositif multi-rapport au nombre restreint de rapport. A cet effet, l'invention a pour objet un procédé de contrôle d'un dispositif de transmission de couple pour véhicule électrique ou hybride, apte à transmettre le couple de la machine électrique du véhicule aux roues motrices du véhicule selon plusieurs rapports de transmission. Tous les rapports permettent d'atteindre la vitesse maximale du véhicule. Le procédé comporte une étape de détection d'une situation de roulage favorable pendant laquelle un changement de rapport de transmission peut être réalisé sans rupture de couple. Si une telle situation est détectée, une étape détermine le rapport de transmission optimum, ladite étape incluant de prédire l'évolution du besoin de puissance compte-tenu des conditions de roulage. Si le rapport optimum déterminé est différent du rapport couramment engagé, une étape engage le rapport de transmission optimum.

Dans un mode de réalisation préférentiel, le dispositif pouvant être apte à transmettre le couple aux roues du véhicule selon deux rapports de transmission exactement, un rapport court maximisant l'accélération et un rapport long minimisant la consommation, l'étape de détermination peut ne choisir le rapport court comme rapport optimum que lorsqu'une augmentation du besoin de puissance est prédite, le rapport long pouvant être le rapport optimum sinon.

Selon la présente invention, l'étape de détection d'une situation de roulage favorable inclut de détecter les situations pendant lesquelles la vitesse du véhicule est nulle, et/ou les situations pendant lesquelles le véhicule freine, et/ou les situations pendant lesquelles, compte-tenu de la position d'un levier de vitesse du véhicule, la transmission du couple aux roues est interrompue.

Avantageusement, la prédiction de l'évolution du besoin de puissance peut comporter une étape de lecture de données de localisation fournies par un dispositif de navigation et incluant la pente future à court terme, ou une étape de lecture de l'inclinaison courante du véhicule fournie par un niveau à bulle, la pente courante ou future ainsi obtenue pouvant faire partie des conditions de roulage dont il est tenu compte pour prédire l'évolution du besoin de puissance. Ces données de localisation peuvent également inclure la vitesse maximale autorisée ou conseillée à court terme, une variation brusque de ladite vitesse pouvant également faire partie des conditions de roulage dont il est tenu compte pour prédire l'évolution du besoin de puissance.

Avantageusement, la prédiction de l'évolution du besoin de puissance peut comporter une étape d'estimation de la pente par comparaison entre la vitesse réellement atteinte et la vitesse théoriquement attendue lorsque le véhicule roule en pente nulle compte-tenu du couple transmis aux roues, la pente courante ainsi estimée pouvant faire partie des conditions de roulage dont il est tenu compte pour prédire l'évolution du besoin de puissance.

Avantageusement, la prédiction de l'évolution du besoin de puissance peut comporte une étape d'estimation de la charge du véhicule par comparaison entre la vitesse réellement atteinte et la vitesse théoriquement attendue lorsque le véhicule roule à charge nominale compte-tenu du couple transmis aux roues, la charge courante ainsi estimée pouvant faire partie des conditions de roulage dont il est tenu compte pour prédire l'évolution du besoin de puissance.

L'invention a également pour objet un calculateur comportant des moyens matériels et logiciels pour implémenter un tel procédé.

L'invention a également pour objet un véhicule électrique ou hybride comportant un tel calculateur.

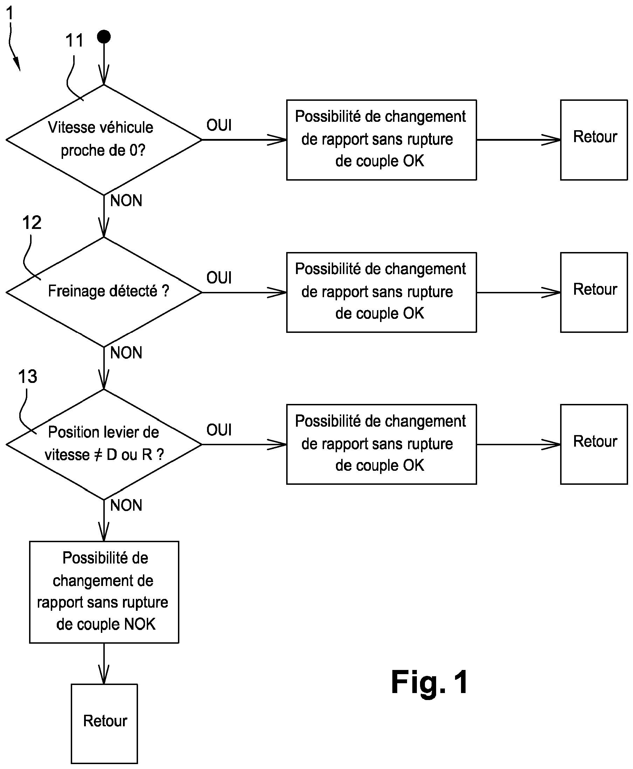

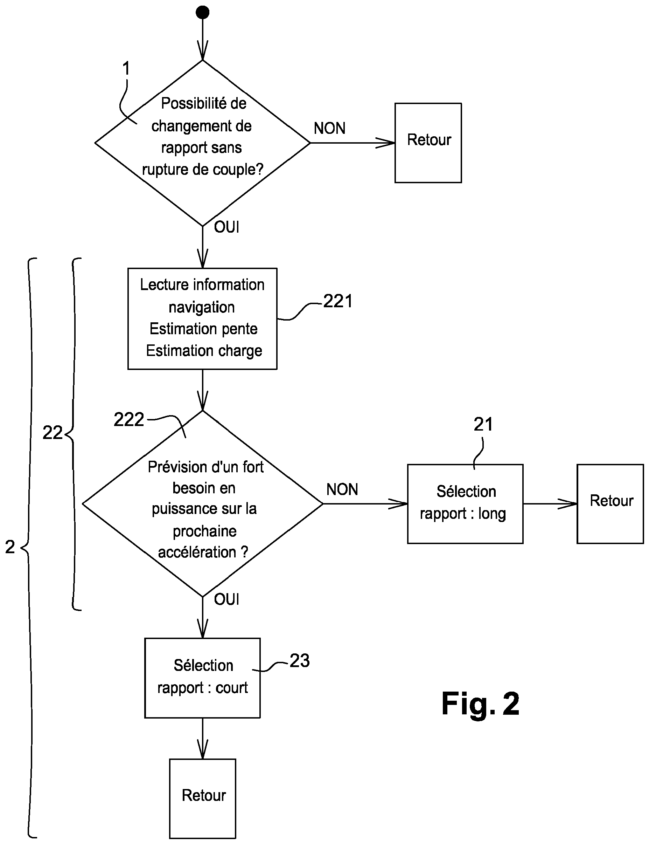

D'autres caractéristiques et avantages de l'invention apparaîtront à l'aide de la description qui suit faite en regard des figures 1 et 2 annexées et qui illustrent, par des diagrammes de séquence, un exemple de réalisation de l'invention.

Dans le présent exemple de réalisation, un dispositif de transmission à seulement deux rapports de transmission est mis en œuvre. Un tel dispositif bi-rapport présente notamment deux avantages. D'abord, il permet de gérer très simplement le compromis entre consommation et performances : un rapport court pour optimiser les performances et un rapport long pour maximiser l'autonomie (i.e. pour minimiser la consommation). Autre avantage, il présente un prix de revient peu élevé compte-tenu notamment du nombre de rapports limité à deux. Mais un tel dispositif bi-rapport à bas coût présente également un inconvénient : il ne permet pas de compenser la rupture de couple lors des changements de rapport et est donc susceptible de dégrader l'agrément de conduite. La présente invention se propose d'y remédier, notamment en profitant des occasions de changement de rapport sans rupture de couple pour décider du rapport à engager. Il s'agit là encore d'un principe directeur de l'invention.

Ainsi, à l'occasion d'un changement de rapport sans rupture de couple, le système selon l'invention détermine quel rapport il faut engager pour la prochaine accélération, et l'engage. Puis, afin d'éviter les désagréments d'un changement de rapport, ce rapport reste engagé en permanence jusqu'à la prochaine occasion de changement de rapport sans rupture de couple. Il faut bien comprendre que, par conséquent, les deux uniques rapports de transmission doivent être définis de telle sorte qu'ils permettent tous les deux d'atteindre la vitesse maximale du cahier des charges du véhicule.

La figure 1 illustre, par un diagramme de séquence, une étape 1 de détection d'une situation de roulage favorable pendant laquelle un changement de rapport de transmission peut être réalisé sans rupture de couple, c'est-à-dire les principales situations à détecter pour savoir s'il est possible de changer de rapport sans que le conducteur ressente une brève interruption de l'accélération. Dans le présent exemple de réalisation, il s'agit d'une situation 11 où le véhicule est arrêté, d'une situation 12 où le freinage est activé par appui sur la pédale de frein, et enfin d'une situation 13 où aucun rapport n'est engagé au niveau du levier de vitesse. Mais d'autres situations plus complexes pourraient être envisagées. Il faut toutefois noter qu'il est préférable de ne pas y inclure la situation de levée de pied de la pédale d'accélérateur, c'est-à-dire une demande de couple négatif par frein moteur, ou encore la situation de demande de couple nul en roue libre, car la volonté du conducteur peut changer très rapidement avant que le changement de rapport ne soit finalisé et le conducteur ressentirait alors un retard d'accélération indésirable qui pénaliserait l'agrément de conduite.

La figure 2 illustre, par un diagramme de séquence, une étape 2 de détermination du rapport optimum, qui est mise en œuvre dès lors qu'une situation de roulage favorable a été détectée conformément à l'étape 1 et qu'il est donc possible de changer de rapport sans rupture de couple. Afin d'optimiser la consommation et l'autonomie, le rapport sélectionné par défaut est le rapport plus long, comme illustré par l'étape 21. En revanche, lorsque des situations où un besoin de performance accru est détecté comme illustré par l'étape 22, le rapport plus court est sélectionné, comme illustré par l'étape 23. Par exemple, les situations dans lesquelles le besoin de performance est accru peuvent inclure les situations où la pente (estimée ou détectée par une fonction de navigation) dépasse un seuil prédéterminé en pourcents (%) ou encore les situations où la charge embarquée dans le véhicule dépasse un seuil prédéterminé en kilogrammes (kg). D'autres situations plus complexes pourraient être envisagées, comme les situations où la navigation détecte un brusque changement de la vitesse maximale autorisée ou conseillée, c'est-à-dire au-delà d'un seuil prédéterminé en kilomètres par heure (km/h) et/ou en-deça d'un délai prédéterminé de l'ordre de quelques secondes, ce qui peut arriver en cas d'entrée sur autoroute, de sortie de péage routier, ou encore en fin de bouchon. Mais d'autres situations encore plus complexes pourraient être envisagées. Afin de détecter ces situations, on peut par exemple utiliser un système du type niveau à bulle ou jauge pour détecter une pente à l'arrêt, on peut utiliser un système de navigation préalablement renseigné par le conducteur pour détecter une pente sur le trajet à court ou moyen terme, on peut aussi implémenter une méthode de comparaison entre la vitesse atteinte et la vitesse attendue lorsque le véhicule est chargé de façon nominale, ceci pour détecter une pente et/ou une charge à bord du véhicule, comme illustré par l'étape 221 Il faut noter que cette dernière méthode requiert que le véhicule ait déjà commencé à rouler, la détection étant réalisée sur un décollage puis enregistrée afin d'être prise en compte lors du décollage suivant. Nous n'allons pas décrire plus en détail ces méthodes car elles ne font pas l'objet de la présente invention.

Afin de mieux illustrer les avantages de l'invention, les tableaux ci-dessous illustrent respectivement le gain en rendement (Table 1) et le gain en couple maximum (Table 2) entre le rapport long (ratio =10 par exemple) et le rapport court (ratio = 15 par exemple) mesurés sur un véhicule électrique capable d'atteindre la vitesse de 130km/h au maximum, équipé d'une machine électrique développant une puissance maximum de 55 kilowatts (kW), un couple maximum de 215 Newton-mètre (Nm) et tournant au maximum à 7500 tours par minute (rpm).

**Table 1**

| | rapport=10 | rapport=15 |
|---|---|---|
| Vitesse roue (rpm) | Rendement @ 200Nm à la roue | Rendement @ 200Nm à la roue |
| 100 | 85,3% | 83,5% |
| 200 | 90,2% | 86,4% |
| 300 | 91,4% | 86,1% |
| 400 | 91,7% | 83,2% |
| 500 | 91,5% | 79,2% |

**Table 2**

| | rapport=10 | rapport=15 |
|---|---|---|
| Vitesse roue (rpm) | Couple max à la roue (Nm) | Couple max à la roue (Nm) |
| 0 | 2120 | 3180 |
| 10 | 2120 | 3180 |
| 50 | 2192 | 3288 |
| 100 | 2192 | 3288 |
| 125 | 2192 | 3288 |
| 150 | 2192 | 3288 |
| 175 | 2192 | 3180 |
| 200 | 2192 | 2630 |
| 225 | 2120 | 2382 |
| 250 | 2048 | 2155 |
| 300 | 1725 | 1765 |
| 350 | 1501 | 1459 |
| 400 | 1313 | 1239 |
| 450 | 1167 | 1102 |
| 500 | 1050 | 1051 |

Il est clair que, par rapport à une solution à un seul rapport court, la présente invention offre un gain très net en termes de consommation et d'autonomie. Par rapport à une solution à un seul rapport long, elle offre un gain très net en termes de performances en pente ou en situation de charge. Par rapport à une solution multi-rapport traditionnelle, elle offre un gain très net en termes d'agrément de conduite, grâce aux changements de rapport imperceptibles effectués uniquement dans des situations bien spécifiques. En d'autres termes, le principal avantage de la présente invention est bien d'offrir le meilleurs compromis entre performances, autonomie, agrément de conduite et surtout coût du véhicule. En effet, c'est une solution logicielle de sélection de rapport qui exploite des capteurs déjà présents sur le véhicule et qui peut être mise en œuvre à partir d'un dispositif classique de transmission bi-rapport peu onéreux à rupture de couple.

L'exemple de réalisation décrit ci-dessus illustre le cas d'une transmission bi-rapport, mais l'homme de l'art saura facilement l'étendre à un plus grand nombre de rapports si nécessaire.

Enfin, dans un mode de réalisation on pourrait envisager un mode sportif activable par un bouton, permettant au conducteur d'imposer le rapport court en permanence s'il souhaite privilégier la performance.

## Revendications

1. Procédé de contrôle d'un dispositif de transmission de couple pour véhicule électrique ou hybride, le dispositif étant apte à transmettre le couple de la machine électrique du véhicule aux roues motrices du véhicule selon plusieurs rapports de transmission, tous lesdits rapports permettant d'atteindre la vitesse maximale du véhicule, le procédé comporte :
- une étape (1) de détection d'une situation de roulage favorable pendant laquelle un changement de rapport de transmission peut être réalisé sans rupture de couple ;
- si une telle situation est détectée, une étape (2) de détermination du rapport de transmission optimum, ladite étape incluant de prédire l'évolution du besoin de puissance (22) compte-tenu des conditions de roulage ;
- si le rapport optimum déterminé est différent du rapport couramment engagé, une étape d'engagement du rapport de transmission optimum,
le procédé étant **caractérisé en ce que** l'étape de détection d'une situation de roulage favorable inclut de détecter :
- les situations pendant lesquelles la vitesse du véhicule est nulle (11), et/ou ;
- les situations pendant lesquelles le véhicule freine (12), et/ou ;
- les situations pendant lesquelles, compte-tenu de la position d'un levier de vitesse du véhicule, la transmission du couple aux roues est interrompue (13).

2. Procédé selon la revendication 1, **caractérisé en ce que**, le dispositif étant apte à transmettre le couple aux roues du véhicule selon deux rapports de transmission exactement, un rapport court maximisant l'accélération et un rapport long minimisant la consommation, l'étape (2) de détermination ne choisit le rapport court comme rapport optimum (23) que lorsqu'une augmentation du besoin de puissance est prédite, le rapport long étant le rapport optimum sinon (21).

3. Procédé selon la revendication 1, **caractérisé en ce que** la prédiction de l'évolution du besoin de puissance (22) comporte :
- une étape (221) de lecture de données de localisation fournies par un dispositif de navigation et incluant la pente future à court terme, ou ;
- une étape de lecture de l'inclinaison courante du véhicule fournie par un niveau à bulle ;
la pente courante ou future ainsi obtenue faisant partie des conditions de roulage dont il est tenu compte pour prédire l'évolution du besoin de puissance.

4. Procédé selon la revendication 1, **caractérisé en ce que** la prédiction de l'évolution du besoin de puissance (22) comporte une étape (221) de lecture de données de localisation fournies par un dispositif de navigation et incluant la vitesse maximale autorisée ou conseillée à court terme, une variation brusque de ladite vitesse faisant partie des conditions de roulage dont il est tenu compte pour prédire l'évolution du besoin de puissance.

5. Procédé selon la revendication 1, **caractérisé en ce que** la prédiction de l'évolution du besoin de puissance (22) comporte une étape (221) d'estimation de la pente par comparaison entre la vitesse réellement atteinte et la vitesse théoriquement attendue lorsque le véhicule roule en pente nulle compte-tenu du couple transmis aux roues, la pente courante ainsi estimée faisant partie des conditions de roulage dont il est tenu compte pour prédire l'évolution du besoin de puissance.

6. Procédé selon la revendication 1, **caractérisé en ce que** la prédiction de l'évolution du besoin de puissance (22) comporte une étape (221) d'estimation de la charge du véhicule par comparaison entre la vitesse réellement atteinte et la vitesse théoriquement attendue lorsque le véhicule roule à charge nominale compte-tenu du couple transmis aux roues, la charge courante ainsi estimée faisant partie des conditions de roulage dont il est tenu compte pour prédire l'évolution du besoin de puissance.

7. Calculateur comportant des moyens matériels et logiciels pour implémenter un procédé selon l'une quelconque des revendications précédentes.

8. Véhicule électrique ou hybride comportant un calculateur selon la revendication précédente.

## Patentansprüche

1. Verfahren zur Steuerung einer Drehmomentübertragungsvorrichtung für ein Elektro- oder Hybridfahrzeug, wobei die Vorrichtung geeignet ist, das Drehmoment der elektrischen Maschine des Fahrzeugs auf die Antriebsräder des Fahrzeugs gemäß mehreren Übersetzungsverhältnissen zu übertragen, wobei alle diese Übersetzungsverhältnisse ermöglichen, die Maximalgeschwindigkeit des Fahrzeugs zu erreichen, wobei das Verfahren umfasst:
- einen Schritt (1) der Erkennung einer günstigen Fahrsituation, in der ein Wechsel des Übersetzungsverhältnisses ohne Zugkraftunterbrechung durchgeführt werden kann;
- falls eine solche Situation erkannt wird, einen Schritt (2) der Bestimmung des optimalen Übersetzungsverhältnisses, wobei der Schritt umfasst, die Entwicklung des Leistungsbedarfs unter Berücksichtigung der Fahrbedingungen vorherzusagen (22);
- falls das bestimmte optimale Übersetzungsverhältnis von dem gegenwärtig eingelegten Übersetzungsverhältnis verschieden ist, einen Schritt des Einlegens des optimalen Übersetzungsverhältnisses,
wobei das Verfahren **dadurch gekennzeichnet ist, dass** der Schritt der Erkennung einer günstigen Fahrsituation umfasst zu erkennen:
- die Situationen, in denen die Geschwindigkeit des Fahrzeugs null ist (11), und/oder
- die Situationen, in denen das Fahrzeug bremst (12), und/oder
- die Situationen, in denen, in Anbetracht der Position eines Gangschalthebels des Fahrzeugs, die Übertragung des Drehmoments auf die Räder unterbrochen ist (13).

2. Verfahren nach Anspruch 1, **dadurch gekennzeichnet, dass**, wenn die Vorrichtung geeignet ist, das Drehmoment gemäß genau zwei Übersetzungsverhältnissen auf die Räder des Fahrzeugs zu übertragen, wobei ein kurzes Übersetzungsverhältnis die Beschleunigung maximiert und ein langes Übersetzungsverhältnis den Verbrauch minimiert, im Schritt (2) der Bestimmung das kurze Übersetzungsverhältnis nur dann als optimales Übersetzungsverhältnis gewählt wird (23), wenn eine Erhöhung des Leistungsbedarfs vorhergesagt wird, wobei andernfalls das lange Übersetzungsverhältnis das optimale Übersetzungsverhältnis ist (21).

3. Verfahren nach Anspruch 1, **dadurch gekennzeichnet, dass** die Vorhersage der Entwicklung des Leistungsbedarfs (22) umfasst:
- einen Schritt (221) des Lesens von Standortdaten, die von einer Navigationsvorrichtung geliefert werden und die in nächster Zeit bevorstehende Steigung umfassen, oder
- einen Schritt des Lesens der aktuellen Neigung des Fahrzeugs, die von einer Wasserwaage geliefert wird;
wobei die so erhaltene aktuelle oder zukünftige Steigung Bestandteil der Fahrbedingungen ist, die berücksichtigt werden, um die Entwicklung des Leistungsbedarfs vorherzusagen.

4. Verfahren nach Anspruch 1, **dadurch gekennzeichnet, dass** die Vorhersage der Entwicklung des Leistungsbedarfs (22) einen Schritt (221) des Lesens von Standortdaten umfasst, die von einer Navigationsvorrichtung geliefert werden und die in nächster Zeit zulässige oder empfohlene Höchstgeschwindigkeit umfassen, wobei eine plötzliche Änderung dieser Geschwindigkeit Bestandteil der Fahrbedingungen ist, die berücksichtigt werden, um die Entwicklung des Leistungsbedarfs vorherzusagen.

5. Verfahren nach Anspruch 1, **dadurch gekennzeichnet, dass** die Vorhersage der Entwicklung des Leistungsbedarfs (22) einen Schritt (221) der Schätzung der Steigung durch Vergleich zwischen der tatsächlich erreichten Geschwindigkeit und der theoretisch zu erwartenden Geschwindigkeit, wenn das Fahrzeug bei Steigung null fährt, unter Berücksichtigung des auf die Räder übertragenen Drehmoments umfasst, wobei die so geschätzte aktuelle Steigung Bestandteil der Fahrbedingungen ist, die berücksichtigt werden, um die Entwicklung des Leistungsbedarfs vorherzusagen.

6. Verfahren nach Anspruch 1, **dadurch gekennzeichnet, dass** die Vorhersage der Entwicklung des Leistungsbedarfs (22) einen Schritt (221) der Schätzung der Last des Fahrzeugs durch Vergleich zwischen der tatsächlich erreichten Geschwindigkeit und der theoretisch zu erwartenden Geschwindigkeit, wenn das Fahrzeug mit Nennlast fährt, unter Berücksichtigung des auf die Räder übertragenen Drehmoments umfasst, wobei die so geschätzte aktuelle Last Bestandteil der Fahrbedingungen ist, die berücksichtigt werden, um die Entwicklung des Leistungsbedarfs vorherzusagen.

7. Computer, welcher Hardware- und Softwaremittel zum Implementieren eines Verfahrens nach einem der vorhergehenden Ansprüche aufweist.

8. Elektro- oder Hybridfahrzeug, welches einen Computer nach dem vorhergehenden Anspruch aufweist.

## Claims

1. Method for controlling a torque transmission device for an electric or hybrid vehicle, the device being able to transmit the torque of the electric machine of the vehicle to the driven wheels of the vehicle according to several transmission ratios, all said ratios enabling the vehicle to reach its maximum speed, the method comprising:
- a step (1) of detecting a favourable running situation in which a change in transmission ratio can be performed without a break in torque;
- if such a situation is detected, a step (2) of determining the optimum transmission ratio, said step including predicting the change in the need for power (22) taking the running conditions into account;
- if the determined optimum ratio differs from the ratio currently engaged, a step of engaging the optimum transmission ratio,
the method being **characterized in that** the step of detecting a favourable running situation includes detecting:
- situations in which the speed of the vehicle is zero (11), and/or;
- situations in which the vehicle is braking (12), and/or;
- situations in which, bearing in mind the position of a gearshift lever of the vehicle, the transmission of torque to the wheels is interrupted (13).

2. Method according to Claim 1, **characterized in that**, with the device being able to transmit the torque to the wheels of the vehicle according to exactly two transmission ratios, a short ratio that maximizes acceleration and a long ratio that minimizes consumption, the determining step (2) chooses the short ratio as the optimum ratio (23) only when an increase in the need for power is predicted, the long ratio being the optimum ratio otherwise (21).

3. Method according to Claim 1, **characterized in that** the prediction of the change in the need for power (22) comprises:
- a step (221) of reading location data supplied by a navigation device and including the short-term future gradient, or;
- a step of reading the current inclination of the vehicle as supplied by a spirit level;
the current or future gradient thus obtained forming part of the running conditions that are taken into consideration in predicting the change in the need for power.

4. Method according to Claim 1, **characterized in that** the predicting of the change in the need for power (22) comprises a step (221) of reading location data supplied by a navigation device and including the maximum speed permitted or advisable in the short term, an abrupt variation in said speed forming part of the running conditions that are taken into consideration in predicting the change in the need for power.

5. Method according to Claim 1, **characterized in that** the predicting of the change in the need for power (22) comprises a step (221) of estimating the gradient by making a comparison between the speed actually achieved and the speed theoretically expected when the vehicle is running at zero gradient bearing in mind the torque transmitted to the wheels, the current gradient thus estimated forming part of the running conditions that are taken into consideration in predicting the change in the need for power.

6. Method according to Claim 1, **characterized in that** the predicting of the change in the need for power (22) comprises a step (221) of estimating the vehicle load by making a comparison between the speed actually achieved and the speed theoretically expected when the vehicle is running at nominal load bearing in mind the torque transmitted to the wheels, the current load thus estimated forming part of the running conditions that are taken into consideration for predicting the change in the need for power.

7. Computer comprising hardware and software means for implementing the method according to any one of the preceding claims.

8. Electric or hybrid vehicle comprising a computer according to the preceding claim.
